# EUROPÄISCHE PATENTSCHRIFT

(11) **EP 0 571 046 B1**
(45) Veröffentlichungstag und Bekanntmachung des Hinweises auf die Patenterteilung: **13.08.1997**
(21) Anmeldenummer: 93201440.0
(22) Anmeldetag: 19.05.1993
(51) Int. Cl.: G11B 5/255

(54) **Gleitkörper mit einer Gleitschicht**
Slider having a sliding layer
Patin de vol avec une couche de glissement

(30) Priorität: 22.05.1992 DE 4216993
(43) Veröffentlichungstag der Anmeldung: 24.11.1993
(73) Patentinhaber: Philips Patentverwaltung GmbH, 22335 Hamburg (DE); Philips Electronics N.V., 5621 BA Eindhoven (NL)
(72) Erfinder: Bachmann, Peter K., Dr., D-20097 Hamburg (DE); Leers, Dieter, D-20097 Hamburg (DE); Wiechert, Detlef Uwe, D-20097 Hamburg (DE)
(74) Vertreter: Hartmann, Heinrich, Dipl.-Ing.

(56) Entgegenhaltungen:
- JOURNAL OF MATERIALS RESEARCH Bd. 5, Nr. 11, November 1990, NJ Seiten 2277 - 2285 K.E. SPEAR ET AL. 'Diamond polytypes and their vibrational spectra'
- PHYSICS WORLD Bd. 4, Nr. 4, April 1991, BRISTOL GB Seiten 32 - 36 P. BACHMANN 'Diamonds from the vapour phase'
- JOURNAL OF MATERIALS RESEARCH Bd. 4, Nr. 2, April 1989, NJ Seiten 385 - 393 D. S. KNIGHT ET AL. 'Characterization of diamond films by Raman spectroscopy'
- IBM TECHNICAL DISCLOSURE BULLETIN. Bd. 25, Nr. 7A, Dezember 1982, ARMONK NEW
- YORK US Seite 3173 G. KAUS ET AL. 'SLIDERS FOR MAGNETIC HEADS OF SURFACE- HARDENED SILICON WITH INTEGRATED ELECTRONIC COMPONENTS'

## Beschreibung

Die Erfindung bezieht sich auf einen Gleitköper, insbesondere für einen Magnetkopf, dessen Gleitfläche mit einer Diamantkristalle enthaltenden und mittels eines CVD-Verfahrens aufgebrachten Gleitschicht versehen ist.

Zur Erhöhung der Lebensdauer und zur Erzielung gleichbleibender Aufnahme- und Wiedergabeeigenschaften sowie zum Schutz gegen chemischen Angriff von Magnetköpfen, wie sie in Audio- und Videorecordern oder für sonstige Speicherzwecke verwendet werden, ist es bekannt, diese mit einer verschleißfesten, reibungsarmen und möglichst auch chemisch beständigen dünnen Schicht zu überziehen. Zur Erzielung eines hohen Signalpegels ist ein geringer Abstand zwischen Speichermedium (z.B. Magnetband) und Magnetkopf von weniger als 100 nm anzustreben. Gleichbleibende Aufnahme- und Wiedergabequalität wird nur dann erreicht, wenn sich der Medium-Kopf-Abstand während der Lebensdauer des Kopfes nicht merkbar ändert. Bei längerer Betriebsdauer kann jedoch sowohl am Magnetkopf als auch am Speichermedium Abrieb auftreten, der die Aufnahme- und Wiedergabequalität beeinflußt. Bei zu harter und/oder zu rauher Kopfoberfläche kann das Speichermedium beschädigt werden. Einige Speichermedien, insbesondere Magnetbänder, enthalten außerdem Reste aggressiver Chemikalien, wie z.B. Chlor, die aus dem Bandmaterial verdampfen und den Magnetkopf korrodieren können.

Bei einer nach JP 59-127214 A (englischsprachige Kurzfassung) bekannten Anordnung der eingangs genannten Art ist ein Gleitkörper eines Magnetkopfes mit einer mittels eines PCVD-Verfahrens aufgebrachten dünnen Kohlenstoffschicht versehen. Diese Kohlenstoffschicht, welche Diamant- und Graphitstrukturen enthält, soll die Härte und Gleitfähigkeit der Gleitfläche des Magnetkopfes erhöhen.

Kristallinen Diamant enthaltende Schichten sind zwar hart und deshalb abriebfest, allerdings verursachen sie wegen ihrer grob-polykristallinen Struktur unerwünscht starke Beschädigungen insbesondere von Magnetbändern.

Der Erfindung liegt die Aufgabe zugrunde, die Gleitschicht des Gleitkörpers der eingangs genannten Art derart zu gestalten, daß an der Gleitschicht entlanggleitende Elemente, wie insbesondere Magnetbänder, weniger beschädigt werden und mit geringem Reibungskoeffizienten gleiten können.

Die Lösung gelingt dadurch, daß die Gleitschicht hexagonale Lonsdaleit-Kristalle enthält, deren Volumenanteil in der Gleitschicht, bezogen auf den Volumenanteil der Diamant-Kristalle, derart gewählt ist, daß das an der Gleitschicht gemessene Intensitätsverhältnis der 〈100〉-Beugungslinie von Lonsdaleit zur <111>-Beugungslinie von Diamant im Röntgenbeugungssepektrum größer als 0,02 ist.

Derart ergeben sich Gleitschichten, die nicht nur selbst abriebfest, sondern welche auch außergewöhnlich glatt und reibungsarm sind, so daß z.B. Magnetbänder kaum beschädigt werden. Verantwortlich dafür ist, daß außer kubischen Diamantkristallen auch ein beachtlicher Anteil von hexagonalen Lonsdaleit-Kristallen in der Gleitschicht enthalten ist.

Ein ausreichender Volumenanteil an Lonsdaleit kann bei der Herstellung durch geeignete Wahl der Verfahrensparameter bewirkt werden. Vorzugsweise haben sich plasmaaktivierte CVD-Verfahren (PCVD) als geeignet erwiesen, bei welchen die kristallinen Strukturen der Gleitschicht unmittelbar auf der Abscheidungsfläche des Gleitkörpers entstehen. Dann ist es nicht erforderlich, zunächst Partikel zu bilden und diese dann an einer zu beschichtenden Fläche eines Gleitkörpers mittels eines Bindemittels festhaftend anzubringen. Dann könnten weder genügend dünne, noch ausreichend fest haftende Flächen erzielt werden. Demgegenüber haften durch PCVD aufgebrachte erfindungsgemäße Gleitschichten ohne zusätzliche Maßnahmen.

Erfindungsgemäße Gleitschichten dürfen ohne wesentliche Verschlechterung der Eigenschaften auch diamantartige Kohlenstoffe (DLC) und/oder kristallinen Graphit und/oder amorphen Graphit enthalten. Besonders vorteilhafte erfindungsgemäße Gleitschichten werden dadurch erreicht, daß der Volumenanteil der Lonsdaleit-Kristalle in der Gleitschicht, bezogen auf den Volumenanteil der Diamant-Kristalle derart gewählt ist, daß das Raman-Spektrum der Gleitschicht zwei breite Linien bei 1140 ± 20 cm⁻¹ und 1470 ± 20 cm⁻¹ zeigt. Besonders feinkristalline Strukturen wurden dann festgestellt, wenn die Halbwertsbreite der breiten Linien zwischen 5 und 100 cm⁻¹ ist.

Vorteilhafte Schichten lassen sich auch dadurch erreichen, daß das an der Gleitschicht 4 gemessene Intensitätsverhältnis der bei 1332 cm⁻¹ gemessenen Linie sowohl zu der bei 1140 ± 20 cm⁻¹ als auch zu der bei 1470 ± 20 cm⁻¹-Linie kleiner als 1 ist.

Lonsdaleit ist ein in Meteoriten festgestellter kristalliner Kohlenstoff, welcher auch bereits synthetisch hergestellt wurde. So wurde gemäß der US-PS 4968 647 Lonsdaleit als Bestandteil in Diamant- oder Karbid-Keramik zur Erhöhung der Zähigkeit integriert.

Das Vorhandensein von Lonsdaleit-Kristallen in einer Schicht sowie deren Mengenanteil wird in üblicher Weise spektographisch (Raman-Spektrum, Röntgenbeugungsspektrum) nachgewiesen.

Erfindungsgemäße Gleichtschichten wurden mit entsprechend angepaßten PCVD-Verfahren hergestellt. Ausreichende Mengenanteile an Lonsdaleit wurden erreicht, wenn der Reaktordruck im Vergleich zur normalen Diamantabscheidung relativ niedrig gewählt wurde, oder wenn die Substrattemperatur relativ hoch gewählt wurde, oder wenn Mischungen aus Acetylen und Sauerstoff bei ca. 50 mbar Druck zur Reaktion gebracht wurden. Abgewandelte Verfahren und/oder Verfahrensparameter sollen jedoch keineswegs als ungeeignet ausgeschlossen werden.

Die Erfindung wird anhand der Zeichnung näher erläutert.
Fig. 1 zeigt schematisch einen Magnetkopf mit einem erfindungsgemäß mit einer Gleitschicht beschichteten Gleitkörper,
Fig. 2 zeigt das Röntgenbeugungsdiagramm der Gleitschicht nach Fig. 1,
Fig. 3 zeigt in gespreizter Darstellung einen Ausschnitt aus Fig. 2,
Fig. 4 zeigt das Raman-Spektrum einer erfindungsgemäßen Gleitschicht,
Fig. 5 zeigt das Raman-Spektrum einer alternativ hergestellten erfindungsgemäßen Gleitschicht.

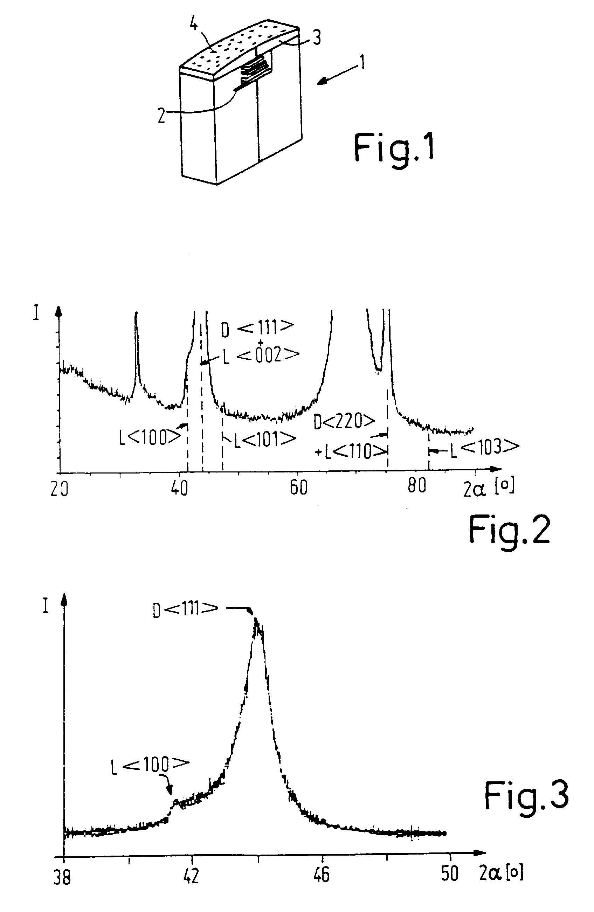

In Fig. 1 ist ein Magnetkopf 1 mit einer Wicklung 2 und mit einem Gleitkörper 3 aus Mn-Zn-Ferrit angedeutet. Der Gleitkörper 3 ist mit einer durch ein PCVD-Verfahren in einem einzigen Abscheidungsschritt aufgebrachten Kohlenstoff-Gleitschicht 4 versehen, welche Diamantkristalle und erfindungsgemäß auch Lonsdaleit-Kristalle enthält.

Fig. 2 zeigt ein mit Kupfer-K-Alpha 1-Strahlung gemessenes Röntgenbeugungsspektrum der Gleitschicht 4. Dabei ist die Intensität I der Beugungsstrahlung in Abhängigkeit vom Beugungswinkel 2α dargestellt. Man mißt den charakteristischen Kristallebenen zuzuordnende Beugungslinien. In der Zeichnung wurden die Kennzeichnungen der Kristallebene mit dem Zeichen D für Diamant und L für Lonsdaleit zusätzlich gekennzeichnet.

Es ist bekannt, daß bei kubischen Diamant-Kristallen im Röntgenbeugungsspektrum u.a. eine große D <111>-Beugungslinie bei einem Beugungswinkel von 2α=44° und eine kleinere D <220>-Beugungslinie bei einem Beugungswinkel von 2α=75° auftreten. Bei hexagonalen Lonsdaleit-Kristallen ergeben sich große Beugungslinien L <100> und L <002> bei Beugungswinkeln von 2α=41° bzw. 2α=44° sowie weitere kleinere Beugungswinkel insb. L <101>, L <102>, L <110>, L <103>.

Da die erfindungsgemäße Gleitschicht sowohl Diamantkristalle als auch Lonsdaleit-Kristalle enthält, erscheinen die charakteristischen Beugungslinien von Diamant und Lonsdaleit auch im Röntgenbeugungsspektrum nach Fig. 2, wobei allerdings wegen des im Vergleich zu Diamant relativ geringen Mengenanteils an Lonsdaleit auch die "große" L <100>-Beugungslinie im Vergleich zur D <111>-Beugungslinie relativ gering ausgeprägt ist. Die L <100> und D <111>-Linien sind in Fig. 3 wegen des gespreizten Abzissenmaßstabes deutlicher erkennbar. Deren Intensitätsverhältnis ist ein Maß für den relativen Mengenanteil von Lonsdaleit und Diamant.
In der folgenden Tabelle sind für Proben 1 bis 11 die im Rötgenbeugungsspektrum gemessenen Intensitätsverhältnisse i der 〈100〉-Beugungslinie von Lonsdaleit zur 〈111〉-Beugungslinie von Diamant aufgelistet. Mit iₐ sind dabei die Verhältnisse der Flächen unter den Peaks angegeben, mit iₚ die entsprechenden Peak-Verhältnisse.

| Prob Nr. | | | | | | | | | | | |
|---|---|---|---|---|---|---|---|---|---|---|---|
| | 1 | 2 | 3 | 4 | 5 | 6 | 7 | 8 | 9 | 10 | 11 |
| iₚ | 0 | <0,001 | 0,001 | 0,003 | 0,007 | 0,015 | 0,032 | 0,035 | 0,049 | 0,054 | 0,097 |
| iₐ | 0 | 0,001 | 0,004 | 0,005 | 0,007 | 0,018 | 0,031 | 0,034 | 0,080 | 0,030 | 0,046 |

An die Kohlenstoffschichten dieser Proben wurde jeweils ein kommerzielles Videoband (Dicke 18 µm) mittels einer mit 1 Newton andrückenden Rubinkugel (1,5 mm Durchmesser) gedrückt. Nach dem Durchziehen der Bandlänge wurden bei den Proben 1 bis 6 Bandschäden in Form von deutlich erkennbaren Riefen festgestellt. Bei den Proben 7 bis 11 konnte man dagegen keine Riefen erkennen. Bei keiner der Proben wurde ein Abrieb der in allen Fällen harten Kohlenstoffschicht festgestellt.

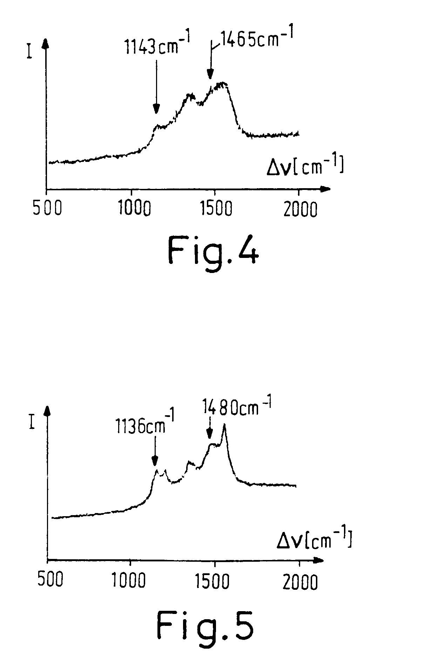

Fig. 4 zeigt das Raman-Spektrum an der Gleitschicht 4 nach Fig. 1. Die für Diamant typische Raman-Spektrallinie bei 1332 cm⁻¹ ist nicht zu erkennen. Deutlich ausgeprägt sind dagegen die für erfindungsgemäß verwendbare Schichten typischen breiten Banden bei 1145 ± 20 cm⁻¹ und bei 1470 ± 20 cm⁻¹. In Beispiel nach Fig. 4 liegen die Linien bei 1143 cm⁻¹ und bei 1465 cm⁻¹ und sind mit Pfeilen gekennzeichnet.

Fig. 5 zeigt das Raman-Spektrum einer mit geänderten Verfahrensparametern hergestellten erfindungsgemäßen Gleitschicht. Dabei wurde im Mikrowellen-Plasma-CVD-Verfahren ein Acetylen/Sauerstoffgemisch als Ausgangsgas verwendet. Auch hier sind die typischen Raman-Banden bei 1145 ± 20 cm⁻¹ (hier bei 1136 cm⁻¹) und bei 1470 ± 20 cm⁻¹ (hier bei 1480 cm¹⁰¹) sichtbar, und auch hier ist die dem Diamant zugehörige Linie bei 1332 cm⁻¹ kaum sichtbar.

## Patentansprüche

1. Gleitkörper (3), insbesondere für einen Magnetkopf (1), dessen Gleitfläche (4) mit einer Diamantkristalle enthaltenden und mittels eines CVD-Verfahrens aufgebrachten Gleitschicht (4) versehen ist,
dadurch gekennzeichnet, daß die Gleichtschicht (4) hexagonale Lonsdaleit-Kristalle enthält, deren Volumenanteil in der Gleitschicht (4), bezogen auf den Volumenanteil der Diamant-Kristalle, derart gewählt ist, daß das an der Gleitschicht gemessene Intensitätsverhältnis der <100>-Beugungslinie von Lonsdaleit zur <111>-Beugungslinie von Diamant im Röntgenbeugungssepektrum größer als 0,02 ist.

2. Gleitkörper nach Anspruch 1,
dadurch gekennzeichnet, daß der Volumenanteil der Lonsdaleit-Kristalle in der Gleitschicht (4), bezogen auf den Volumenanteil der Diamant-Kristalle derart gewählt ist, daß das Raman-Spektrum der Gleitschicht (4) zwei breite Linien bei 1140 ± 20 cm⁻¹ und 1470 ± 20 cm⁻¹ zeigt.

3. Gleitkörper nach Anspruch 2,
dadurch gekennzeichnet, daß die Halbwertsbreite der breiten Linien zwischen 5 und 100 cm⁻¹ ist.

4. Gleitkörper nach einem der Ansprüche 1 bis 3,
dadurch gekennzeichnet, daß das an der Gleitschicht 4 gemessene Intensitätsverhältnis der bei 1332 cm⁻¹ gemessenen Linie sowohl zu der 1140 ± 20 cm⁻¹ als auch zu der bei 1470 ± 20 cm⁻¹-Linie kleiner als 1 ist.

## Claims

1. An antifriction body (3), in particular for a magnetic head (1), the antifriction surface (4) of said body being provided with an antifriction layer (4) which contains diamond crystals and which is provided by means of a CVD process, characterized in that said antifriction layer (4) contains hexagonal lonsdaleite crystals whose volume percentage in the antifriction layer (4), with respect to the volume percentage of diamond crystals, is selected to be such that the intensity ratio, measured on the antifriction layer, between the <100> diffraction line of lonsdaleite and the <111> diffraction line of diamond in the X-ray diffraction spectrum exceeds 0.02.

2. An antifriction body as claimed in Claim 1, characterized in that the volume percentage of lonsdaleite crystals in the antifriction layer (4), with respect to the volume percentage of diamond crystals, is selected to be such that the Raman spectrum of the antifriction layer (4) exhibits two broad peaks at 1140 ± 20 cm⁻¹ and 1470 ± 20 cm⁻¹.

3. An antifriction body as claimed in Claim 2, characterized in that the half-width of the broad peaks ranges between 5 and 100 cm⁻¹.

4. An antifriction body as claimed in any one of the Claims 1 upto and including 3, characterized in that, for the antifriction layer (4), the intensity ratio between the peak measured at 1332 cm⁻¹ and the peaks measured at 1140 ± 20 cm⁻¹ and at 1470 ± 20 cm⁻¹ is smaller than 1.

## Revendications

1. Patin de vol (3), en particulier pour une tête magnétique (1), dont la surface de glissement est dotée d'une couche de glissement (4) contenant un cristal de diamant et appliquée à l'aide d'un procédé CVD, caractérisé en ce que la couche de glissement (4) contient des cristaux hexagonaux de lonsdaléite dont la part volumique dans la couche de glissement (4) par rapport à la part volumique des cristaux de diamant est choisie de telle sorte que le rapport d'intensité de la raie de diffraction <100> de la lonsdaléite par rapport à la raie de diffraction <111> du diamant dans le spectre de diffraction des rayons X, mesuré sur la couche de glissement, soit supérieur à 0,02.

2. Patin de vol selon la revendication 1, caractérisé en ce que la part volumique des cristaux de lonsdaléite dans la couche de glissement (4), par rapport à la part volumique des cristaux de diamant, est choisie de telle sorte que le spectre Raman de la couche de glissement (4) présente deux larges raies à 1140 ± 20 cm⁻¹ et à 1470 ± 20 cm⁻¹.

3. Patin de vol selon la revendication 2, caractérisé en ce que la largeur de valeur moyenne des raies larges se situe entre 5 et 100 cm⁻¹.

4. Patin de vol selon l'une des revendications 1 à 3, caractérisé en ce que le rapport d'intensité mesuré à la couche de glissement (4) de la raie mesurée à 1332 cm⁻¹ tant par rapport à la raie à 1140 ± 20 cm⁻¹ que par rapport à la raie à 1470 ± 20 cm⁻¹ est inférieur à 1.
